# EUROPEAN PATENT APPLICATION

(11) **EP 1 653 578 A2**
(43) Date of publication of application: **03.05.2006**
(21) Application number: 05022901.2
(22) Date of filing: 20.10.2005
(51) Int. Cl.: H01S 3/102, H01S 3/094

(54) **Semiconductor-laser-pumped solid-state laser apparatus**

(30) Priority: 28.10.2004 JP 2004314065
(71) Applicant: FANUC LTD, Minamitsuru-gun, Yamanashi 401-0597 (JP)
(72) Inventor: Machida, Hisatada, Fanuc Dai3virakaramatsu, Minamitsuru-gun Yamanashi 401-0511 (JP); Yoshida, Hiroyuki, Gotenba-shi Shizuoka 412-0042 (JP); Takahashi, Hiromitsu, Minamitsuru-gun Yamanashi 401-0310 (JP); Nishikawa, Yuji, Room 14-408, Minamitsuru Yamanashi 401-0511 (JP)
(74) Representative: Schmidt, Steffen J.

(57) **Abstract**

A semiconductor-laser-pumped solid-state laser apparatus (11) which operates laser oscillation by exciting a solid-state laser medium (1) using a semiconductor laser (2) is described. The semiconductor-laser-pumped solid-state laser apparatus (11) has driving current switching means for switching, in accordance with an external control signal, a driving current between a state in which the driving current not less than an emission threshold value of the semiconductor laser is supplied to the semiconductor laser, and a state in which the driving current smaller than the emission threshold value of the semiconductor laser is supplied to the semiconductor laser. An external control apparatus sends an external control signal to a semiconductor-laser-pumped solid-state laser apparatus even if the laser radiation of the solid-state laser is stopped.
Therefore, the electric power consumption of a laser machining system can be reduced and the lifetime of the semiconductor laser can be prolonged.

## Description

### BACKGROUND OF THE INVENTION

### 1. Field of the invention

This invention relates to a semiconductor-laser-pumped solid-state laser apparatus, and particularly a semiconductor-laser-pumped solid-state laser apparatus in which a driving current for a semiconductor laser can be controlled in accordance with a signal from an external control apparatus for controlling a laser machining system.

### 2. Description of the Related Art

Laser machining systems have been used in various fields and, for example, for cutting of materials or parts, welding, a surface modification, marking or trimming. Various laser apparatuses are used as laser machining systems. In a semiconductor-laser-pumped solid-state laser apparatus, a semiconductor laser is generally used as a pumping light source for a solid laser medium from the viewpoint that the semiconductor laser radiates a beam of a single wavelength and has a long life. The semiconductor-laser-pumped solid-state laser apparatus, which is advantageous compared to a conventional lamp pumped solid-state laser apparatus, involves less energy consumption, reduction of maintenance time and enhances the machining quality.

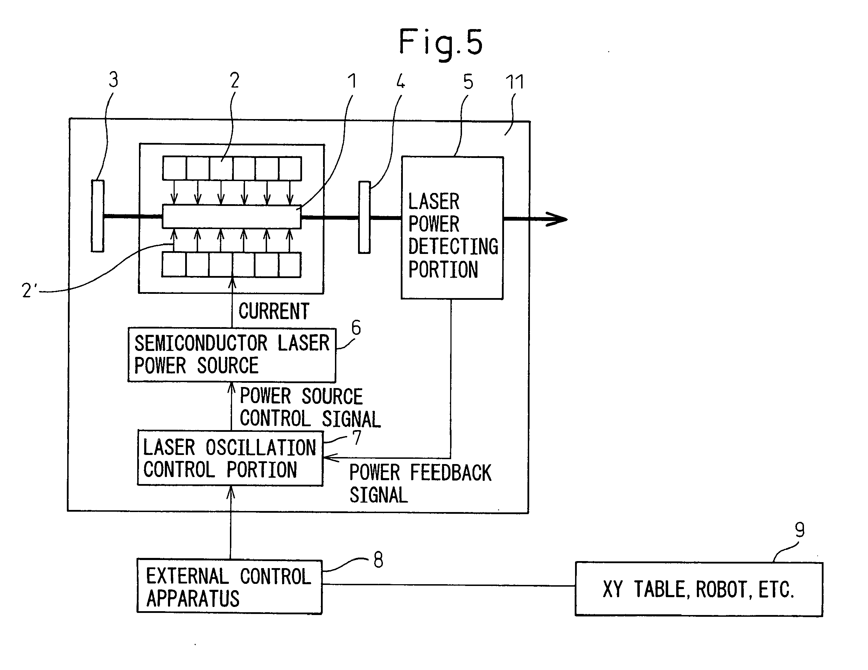

Fig. 5 shows a block diagram of a constitution of a conventional semiconductor-laser-pumped solid-state laser apparatus. In the drawing, a semiconductor-laser-pumped solid-state laser apparatus 11 comprises a solid state laser medium 1, semiconductor laser 2, a rear mirror 3, an output mirror 4, a laser power measurement portion 5, a semiconductor laser power source 6 and a laser oscillation control portion 7 for only the semiconductor-laser pumped solid-state laser apparatus 11. Numeral 8 indicates an external control apparatus, which externally controls all laser machining system apparatus. Numeral 9 indicates a machining station such as an XY table, a robot, etc.

The operation of the apparatus will be described below. The solid-state laser medium 1 is pumped by a pumping light 2' from the semiconductor laser 2. A current outputted from the semiconductor laser power source 6 drives the semiconductor laser 2. The semiconductor laser power source 6 is controlled by a power source control signal outputted from the laser oscillation control portion 7. The laser oscillation control portion 7 operates feedback control in accordance with a feedback signal from the laser power measurement portion 5 and various output conditions set by an user interface (not shown in the drawings), such as a personal computer, for only the solid state laser apparatus, so that the laser output is controlled. The laser oscillation control portion 7 also detects an abnormality of the semiconductor-laser-pumped solid-state laser apparatus and outputs an alarm through the user interface.

In the laser machining system, a signal, in accordance with a machining state at various positions of the machining station 9 such as an X-Y table, a robot, etc., is provided to the external control apparatus 8 to output a start signal and a stop signal to the laser oscillation control portion 7. Accordingly, the external control apparatus 8 can output the laser start signal to the laser oscillation control portion 7 to start a laser radiation, at any time a user wants in the machining steps.

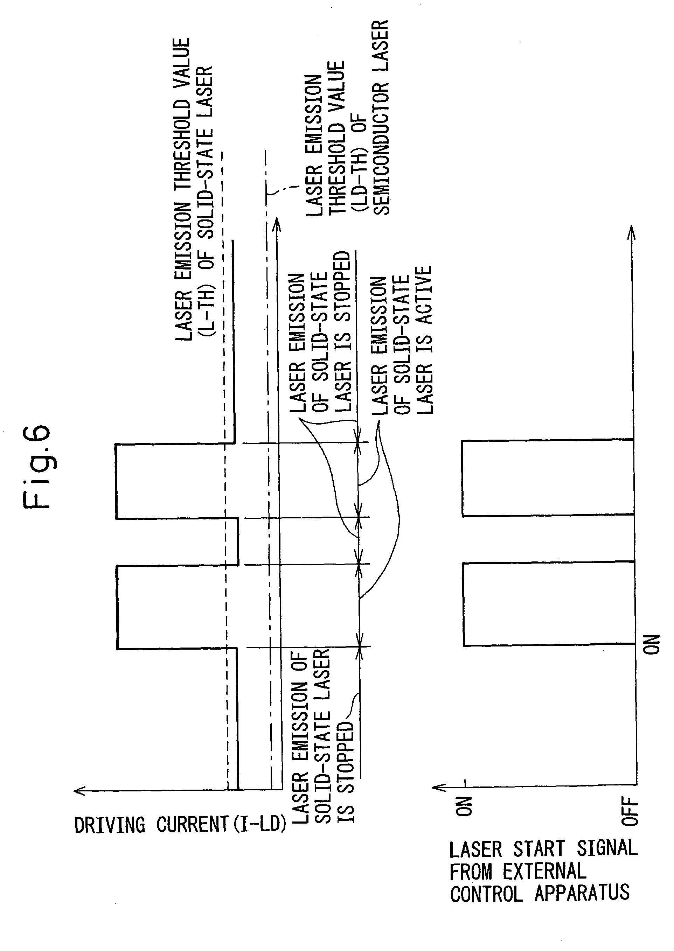

Fig. 6 shows time charts of the driving current for the semiconductor laser in the laser machining system using the semiconductor-laser-pumped solid-state laser apparatus 11 shown in Fig. 5 and the laser start signal from the external control apparatus 8. If the laser start signal from the external control apparatus 8 is off, the laser oscillation does not occur. In this case, the driving current (I-LD) of the semiconductor laser is generally designated by the laser oscillation control portion 7, as described in Japanese Patent Publication No. 10-321933A, so that the driving current is not less than a laser emission threshold value (LD-TH) of the semiconductor laser and is not more than a laser emission threshold value (L-TH) of the solid state laser oscillator, to shorten a rise time of the laser oscillation. On the other hand, if the laser start signal from the external control apparatus 8 is on, a program in the external control apparatus 8 starts to control the laser oscillation control portion 7 to instruct the semiconductor laser power source 6 to output the driving current, and the laser radiation is operated as a current which is bigger than the laser emission threshold value (L-TH) of the solid state laser oscillator is applied to the semiconductor laser. The technical feature described in the above mentioned Publication No. 10-321933A is to control the rise time of a pulse type laser and could have negative effects on a reduction in electrical power consumption and the life of the semiconductor laser.

In a practical laser machining system, there are time periods when the laser apparatus operates a laser radiation for machining of a work piece and when the laser radiation is not operated due to the change of the work piece and the replacement of a stage of the laser apparatus. In a time period when the laser radiation is not operated, the laser start signal from the external control apparatus is off. Conventionally, even if the laser start signal from the external control apparatus is off and the laser machining is not being operated, as shown in Fig. 6, the driving current I-LD which satisfies LD-TH<I-LD<L-TH is supplied to the semiconductor laser 2. Therefore, the power is consumed even in the time period when the laser machining is not conducted. The lifetime of a semiconductor laser is generally defined by a time period when a driving current can be supplied. Therefore, if a driving current is supplied to semiconductor laser even in the time when laser machining is not conducted, the life thereof could be reduced by the time when the laser machining is not operated but the driving current is supplied thereto, and this is not advantageous from an economical aspect.

As mentioned above, conventionally, the external control apparatus 8 provides the laser oscillation control portion 7 with the start signal and the stop signal, but, the external control apparatus 8 does not control the laser oscillation control portion 7 in the time period when the laser emission is not conducted due to the change of the machining station 9 and the replacement of the stage. Accordingly, the driving current I-LD, which is smaller than L-TH and is bigger than LD-TH, is supplied in accordance with the program in the laser oscillation control portion 7 even though the laser radiation of the solid-state laser apparatus is stopped. Therefore, there are problems that electric power consumption is large and the lifetime of the semiconductor laser 2 is short.

### SUMMARY OF THE INVENTION

It is an object of the present application to provide a semiconductor-laser-pumped solid-state laser apparatus in which an external control apparatus controls a laser oscillation control portion, even no radiation of a laser beam from the solid state laser apparatus occurs to reduce the electric power consumption of a laser machining system and to prolong the lifetime of the semiconductor laser.

To achieve the above mentioned object, according to a first aspect of the present invention, there is provided a semiconductor-laser-pumped solid-state laser apparatus having driving current switching means switching, in accordance with an external control signal, a driving current between a state in which a driving current not less than an emission threshold value of the semiconductor laser is supplied to the semiconductor laser, and a state in which a driving current smaller than the emission threshold value of the semiconductor laser is supplied to the semiconductor laser.

In a second aspect of the present invention, the driving current switching means switches the driving current for the semiconductor laser in a standby state in which no laser machining is operated.

In a third aspect of the present invention, the driving current switching means uses a signal which is synchronous with an interlock signal to stop the operation of the laser machining system when the laser machining system becomes defective, as an external control signal.

In a fourth aspect of the present invention, the driving current switching means receives the external control signal through a signal line.

In a fifth aspect of the present invention, the driving current switching means receives the external control signal through a radio communication line.

In a sixth aspect of the present invention, the driving current switching means comprises selecting means selecting a mode that the switching of the driving current of the semiconductor laser can be conducted from the external control apparatus, or a mode that the current is kept at a predetermined value set by a user interface or the like, namely, in general, a value which is not less than the emission threshold value of the semiconductor laser.

According to the first aspect, as the reduction of the power consumed in the laser machining system and the long lifetime of the semiconductor laser can be achieved by an easy constitution, the reliability of the laser machining system using the semiconductor-laser-pumped solid-state laser apparatus is enhanced. In detail, switching the on/off state of the driving current can be conducted using the external control signal, regardless of the state of the laser machining. In the off state, the power consumed by the semiconductor laser is zero or nearly zero, and the electric power consumption is reduced.

According to the second aspect, as the switching of the driving current of the semiconductor laser is conducted in the standby state in which the laser machining is not operated, the driving current can be switched without an effect on the laser machining.

According to the third aspect, as the signal, which is synchronous with the interlock signal, is used as the external control signal, the switching of the driving current can be safely operated.

According to the fourth aspect, as the control signal from the external control apparatus is inputted to the laser oscillation portion through the signal line, the control signal is properly provided to the laser oscillation control portion.

According to the fifth aspect, as the control signal from the external control apparatus is inputted to the laser oscillation control portion through the radio communication line, the control signal is properly provided to the laser oscillation control portion.

According to the sixth aspect, as a user can select the mode where the switching of the driving current of the semiconductor laser in the standby position can be operated by the external control apparatus, or the mode where the current is kept at the current value which is not less than the laser emission threshold value of the semiconductor laser, the semiconductor-laser-pumped solid-state laser apparatus can be flexibly used in accordance with an environment of use thereof.

### BRIEF DESCRIPTION OF THE DRAWINGS

The inventions will be more apparent from the following descriptions discussed in the Description of the Preferred Embodiments by referring to the accompanying drawings wherein:
Fig. 1 is a block diagram of a constitution of a semiconductor-laser-pumped solid-state laser apparatus in accordance with a first embodiment of the present invention;
Figs. 2A-2C show time charts of a first operation of the semiconductor-laser-pumped solid-state laser apparatus 11a shown in Fig. 1;
Figs. 3A-3C show time charts of a second operation of the semiconductor-laser-pumped solid-state laser apparatus 11a shown in Fig. 1.
Fig. 4 is a block diagram of a constitution of a semiconductor-laser-pumped solid-state laser apparatus in accordance with a second embodiment of the present invention;
Fig. 5 is a block diagram of a constitution of a conventional semiconductor-laser-pumped solid-state laser apparatus; and
Fig. 6 shows time charts of a driving current of a semiconductor laser in a laser machining system using the semiconductor-laser-pumped solid-state laser apparatus 11 shown in Fig. 5 and a laser start signal from an external control apparatus 8;

### DESCRIPTION OF THE PREFERRED EMBODIMENTS

The embodiment of a semiconductor-laser-pumped solid-state laser apparatus of the present invention will be discussed below, by referring to the drawings.

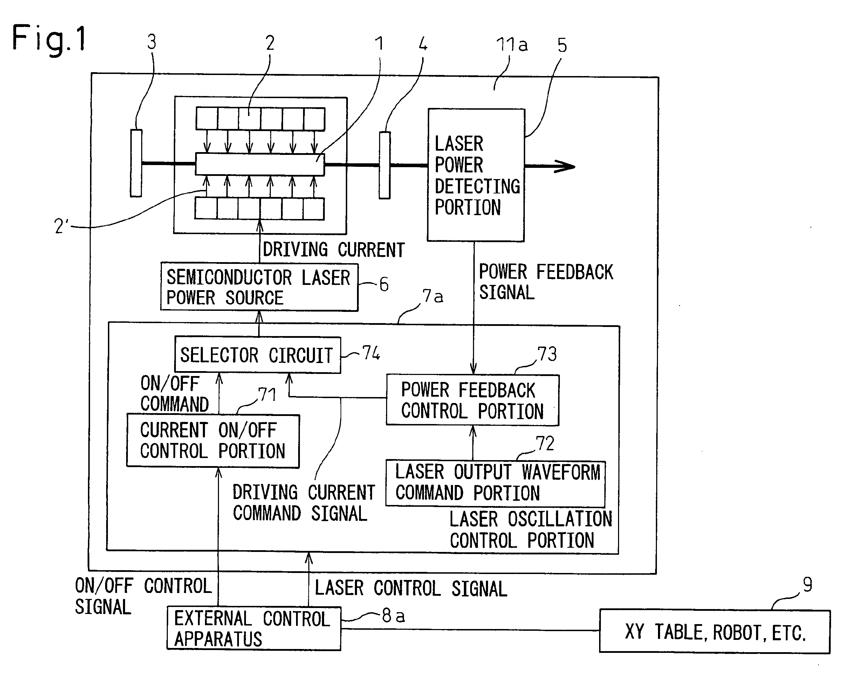

Fig. 1 is a block diagram of a constitution of a semiconductor-laser-pumped solid-state laser apparatus in accordance with a first embodiment of the present invention. In the drawing, the constitution of the semiconductor-laser-pumped solid-state laser apparatus 11a is basically identical to the constitution of the conventional semiconductor-laser-pumped solid-state laser apparatus 11 shown in Fig. 5, and the identical portions thereof are referred to by identical numerals. In the present invention, the constitutions of a laser oscillation control portion 7a and an external control apparatus 8a are different from the prior art.

The semiconductor-laser-pumped solid-state laser apparatus shown in the embodiment has a current on/off control portion 71 which outputs an on/off command signal in accordance with the on/off control signal outputted from the external control apparatus 8a, a laser output waveform command portion 72 which instructs output of the waveform of the laser signal, an power feedback control portion 73 which outputs a driving current command signal in accordance with the output of the laser output waveform command portion 72 and a power feedback signal from a laser power measurement portion 5, and a selector circuit 74.

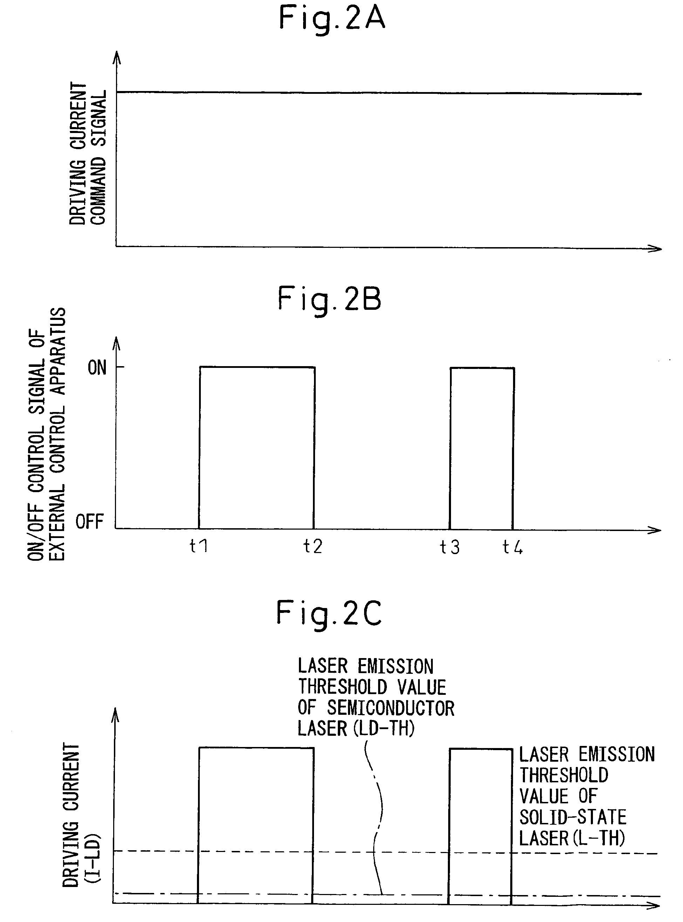

Figs. 2A-2C show time charts of a first operation of the semiconductor-laser-pumped solid-state laser apparatus 11a shown in Fig. 1. In the drawings, Fig. 2A shows a waveform of the driving current command signal outputted from the power feedback control portion 73. In this state, the driving current command signal, at a constant level, is continuously outputted. Accordingly, radiation of the laser beam is always applied to the machining station 9. Fig. 2B shows a waveform of the on/off control signal outputted from the external control apparatus 8a. In this embodiment, the on/off control signal is on in time t1, off in time t2, on in time t3 and off in time t4. This on/off control signal corresponds to a machining state of the work piece. Fig. 2C shows a waveform of the driving current outputted from the semiconductor-laser power source 6 in accordance with the on/off control signal shown in Fig. 2B. If the on/off control signal is on, the driving current is dependent on a signal from the output feedback control portion. If the on/off control signal is off, the driving current is not more than the laser emission threshold value of the semiconductor laser.

In the illustrated embodiment of the present invention, the driving current supply command signal as mentioned in the prior art is outputted to a semiconductor laser power source 6 by the laser output waveform command portion 72 and the power feedback portion 73, and the on/off signal of the present invention is outputted to the semiconductor laser power source 6 from the current on/off control portion 71. The driving current supply command signal outputted from the power feedback control portion 73 includes different signal, as in the prior art, for the laser emission state (I-LD>L-TH) and for no emission state (L-TH>I-LD>LD-TH). The selector circuit 74 is designed so that the off signal of the power on/off control portion 71 is outputted in preference to the output of the output feedback control portion 73.

Accordingly, if the on/off control signal outputted from the external control apparatus 8a is inputted, in the off state, to the current on/off control portion 71, the on/off command signal is provided to the semiconductor laser power source 6. The driving current I-LD of the semiconductor laser 2 is not dependent on the output of the output feedback control portion 73 and becomes zero or a weak current. As a result, the driving current has two states, a laser emission pausing state (LD-TH>I-LD) in which the driving current becomes zero or the weak current and the laser emission state (I-LD>L-TH).

For example, position information of the work piece in the machining station is detected in accordance with an on/off contact signal of a limit switch, a proximity sensor, etc., and the detected output signal is interlocked with the on/off control signal outputted from the external control apparatus 8a. Therefore, even if there is more or less deformation or displacement of the work piece, exact machining at the same position can be operated. On the other hand, while the machining is not operated, the driving current I-LD of the semiconductor laser is smaller than the laser emission threshold value LD-TH of the semiconductor laser and is substantially zero. Therefore, reduction of the electric power consumption can be achieved.

In this embodiment, it is assumed that the on/off contact signal is interlocked with the on/off control signal outputted from the external control apparatus 8a. However, the kind of a signal to be interlocked with the on/off control signal is not limited thereto and a signal can be used if a method to identify the switching of on and off can be used. Furthermore, the connection between the laser oscillator control apparatus 7a and the external control apparatus 8a can be conducted by not only a signal line, but also by a radio communication line.

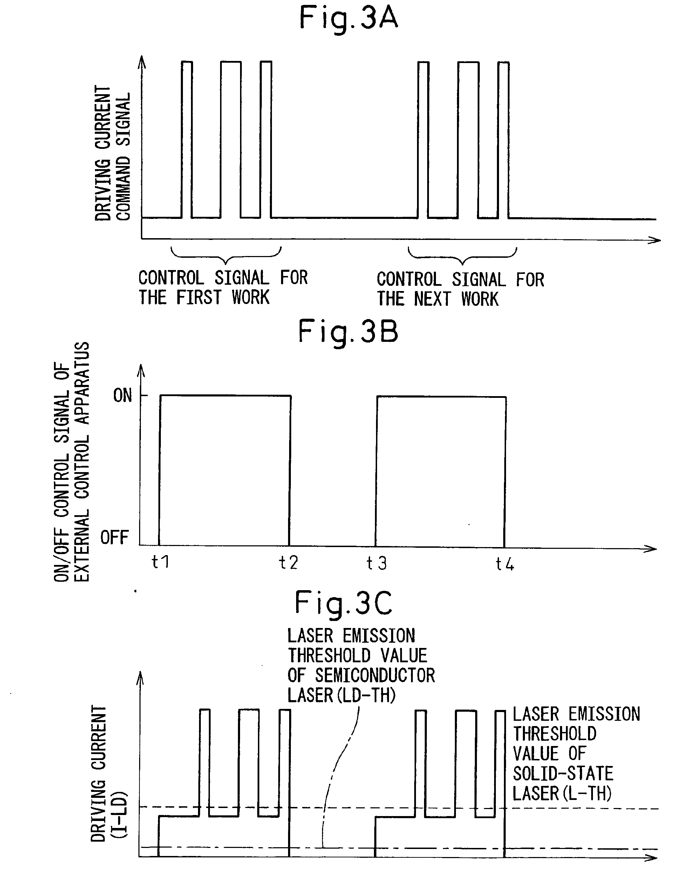

In general laser machining, there are some machining points for a work piece, and the distance from the current machining point to a subsequent machining point is often so small that it takes only one second or less for the movement. The case that the distance between two machining points or the time for the movement is small will be discussed as follows. Figs. 3A-3C show time charts of a second operation of the semiconductor-laser-pumped solid-state laser apparatus 11a shown in Fig. 1. In the drawings, Fig. 3A indicates a waveform of the driving current command signal outputted from the power feedback control portion 73. In this embodiment, three driving current command signals are outputted from the power feedback control portion 73 in the first control signal of the work. Furthermore, three driving current command signals are also outputted from the output feedback control portion 73 in the next control signal of the work. Fig. 3B indicates an example of the on/off control signal outputted from the external control apparatus 8a. In this embodiment, the on/off signal is on in time t1, off in time t2, off in time t3 and off in time t4. This on/off control signal corresponds to the state of the machining station 9. Fig. 3C indicates a waveform of the driving current outputted from the semiconductor laser power source 6 in accordance with the driving current command shown in Fig. 3A and the on/off control signal shown in Fig. 3B.

As can be seen from Fig. 3C, in this embodiment, machining in a work is conducted by the selector circuit 74 in accordance with an internal control of the laser oscillator as shown in Fig. 3A (an output control of an power feedback control portion 73). When the laser radiation is stopped for a long time, for example, upon changing the work piece, as shown in Fig. 3B, the selector circuit 74 selectively receives the signal from the external control apparatus 8a and enters a laser radiation pause state. When the work piece has been prepared, the laser radiation pause state is cancelled using the external control signal to restart the machining. Furthermore, if the timing for canceling the laser radiation pausing state is set just before a time when the machining of the next work begins, the driving current of the semiconductor laser is supplied before laser radiation, and the rise time can be shortened. Furthermore, the electric power consumption during the time period when the machining is not operated can be reduced without sacrificing the performance of the laser oscillator.

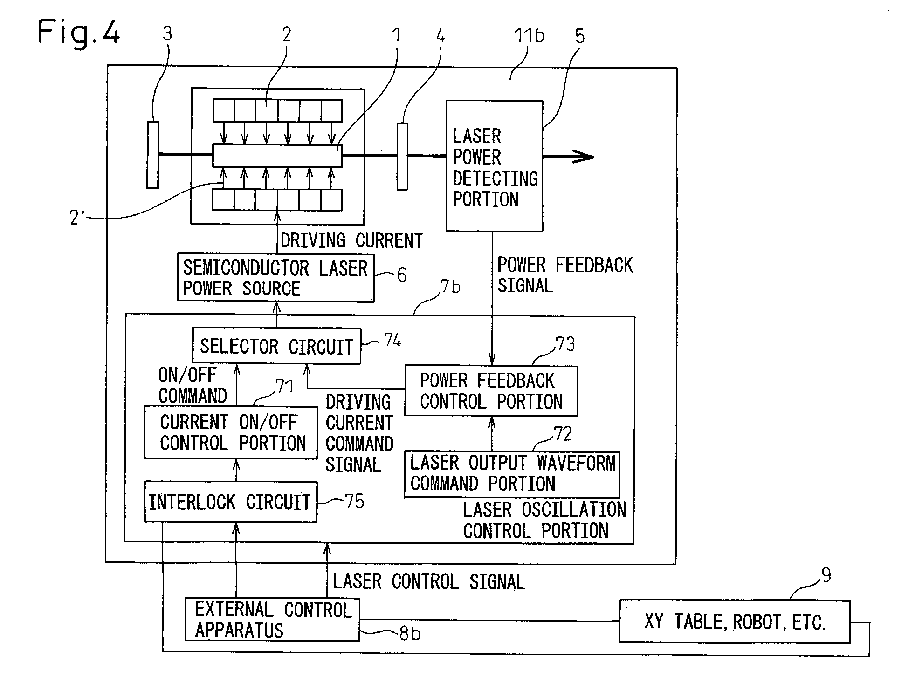

Fig. 4 is a block diagram of a constitution of the semiconductor-laser-pumped solid-state laser apparatus in accordance with a second embodiment of the present invention. In the drawing, the difference from Fig. 1 is that an interlock circuit 75 is provided between the power on/off control portion 71 and the external control apparatus 8b in the semiconductor-laser-pumped solid-state laser apparatus 11b. The interlock circuit 75 receives a signal indicating an abnormality of the laser machining system from the machining station 9.

In this embodiment, a signal, which is synchronous with an external interlock signal to stop the operation of the laser machining system when an abnormality occurs therein, is used as the external control signal. However, unlike the general interlocking function, the driving current, as mentioned in the prior art and outputted from the output feedback control portion 73 which is controlled by the laser oscillator control portion 7b, is supplied after the interlocking is released, so that the laser beam is outputted from the laser. Therefore, an operator must be careful not to enter a dangerous area where the laser beam is irradiated.

The semiconductor-laser-pumped solid-state laser apparatus of the present invention can be controlled by the signal from the external control apparatus, and the electric power consumption thereof is reduced and the lifetime of the semiconductor laser is prolonged.

## Claims

1. A semiconductor-laser-pumped solid-state laser apparatus for performing laser oscillation by exciting a solid-state laser medium, comprising:
Driving current switching means switching, in accordance with an external control signal, a driving current between a state in which a driving current not less than an emission threshold value of said semiconductor laser is supplied to said semiconductor laser, and a state in which a driving current smaller than the emission threshold value of said semiconductor laser is supplied to said semiconductor laser.

2. The semiconductor-laser-pumped solid-state laser apparatus as claimed in claim 1, wherein said driving current switching means switches the driving current for said semiconductor laser in a standby status in which no laser machining is conducted.

3. The semiconductor-laser-pumped solid-state laser apparatus as claimed in claim 1, wherein said driving current switching means uses a signal which is synchronous with an interlock signal to stop the operation of a laser machining system when said laser machining system becomes defective, as an external control signal.

4. The semiconductor-laser-pumped solid-state laser apparatus as claimed in claim 1, wherein said driving current switching means receives said external control signal through a signal line.

5. The semiconductor-laser-pumped solid-state laser apparatus as claimed in claim 1, wherein said driving current switching means receives said external control signal through a radio communication line.

6. The semiconductor-laser-pumped solid-state laser apparatus as claimed in claim 1, wherein said driving current switching means comprises selecting means selecting a mode that the switching of the driving current of said semiconductor laser can be conducted from said external control apparatus, or a mode that the current is kept at a predetermined value which is not less than the emission threshold value of the semiconductor laser.
